(19) Europäisches Patentamt
European Patent Office
Office européen des brevets

(11) **EP 1 975 425 B1**

(12) **EUROPÄISCHE PATENTSCHRIFT**

(45) Veröffentlichungstag und Bekanntmachung des Hinweises auf die Patenterteilung:
**06.09.2017   Patentblatt 2017/36**

(51) Int Cl.:
*F16C 27/06* (2006.01)   *F16C 19/06* (2006.01)

(21) Anmeldenummer: **08012884.6**

(22) Anmeldetag: **04.11.2005**

(54) **Drehverbindung**

Rotary joint

Joint rotatif

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.11.2004   US 627541 P**

(43) Veröffentlichungstag der Anmeldung:
**01.10.2008   Patentblatt 2008/40**

(62) Dokumentnummer(n) der früheren Anmeldung(en) nach Art. 76 EPÜ:
**05810678.2 / 1 809 917**

(73) Patentinhaber: **Schaeffler Technologies AG & Co. KG**
**91074 Herzogenaurach (DE)**

(72) Erfinder:
• **Neubert, Frank**
**97453 Schonungen (DE)**
• **Ebert, Franz-Josef**
**97762 Hammelburg (DE)**
• **Klutsch, Jürgen**
**97453 Schonungen (DE)**
• **Sturm, Gerold**
**97486 Königsberg (DE)**

(56) Entgegenhaltungen:
EP-A1- 0 894 879     WO-A1-2004/055399
DE-A1- 2 819 366     DE-A1- 3 830 386
DE-C1- 19 755 563     JP-A- 7 208 462
US-A- 5 456 538

## Beschreibung

### Gebiet der Erfindung

Drehverbindung mit wenigstens einem Wälzlager und mit einer elektromotorischen Antriebseinheit, wobei das Wälzlager mit wenigstens einer um die Rotationsachse des Wälzlagers angeordneten Reihe Wälzkörper im Kontakt mit mindestens einer durch die Antriebseinheit antreibbaren Laufbahn versehen ist.

### Hintergrund der Erfindung

Eine derartige Drehverbindung ist in DE 10210071 A1 beschrieben. Integrierte und geräuscharme Drehverbindungssysteme sind vielfältig einsetzbar und dienen generell zum Antrieb, zur Verbindung und Abstützung und zur Positionserfassung von den drehenden Massen und deren Ankopplung an statische Bauteile.

Katalogisierte Wälzlager-Drehverbindungen werden heute in vielen industriellen Anwendungen eingesetzt. Dabei handelt es sich in den meisten Fällen um Wälzlager mit Außenring und Innenring, die wahlweise mit axialen Befestigungsbohrungen und/oder -Gewinden zum Anbau und zur Befestigung an dem statischen Bauteil und der drehenden Masse versehen sind.

Im Bereich der Medizintechnik werden Wälzlager-Drehverbindungen in Computertomographen eingesetzt. Weiterhin findet man die Wälzlager-Drehverbindung in ähnlichen röntgonographischen Geräten zur Untersuchung von Gepäckstücken im Sicherheitsbereich z. B. an Flughäfen. Mit dem stetigen Anstieg der Drehzahlen dieser Anwendungen bei gleichzeitiger Anforderung an reduziertes Geräusch, geringes Anlaufdrehmoment, kleinem Bauraum, geringes Gewicht und hoher Laufgenauigkeit sind bekannte Wälzlager-Drehverbindungen ungeeignet und genügen nicht mehr den Ansprüchen dieser Anwendung.

Zur Bildaufnahme- und Bildrekonstruktion der Computertomographen ist es notwendig die genaue Winkellage und Position der rotierenden Komponenten zu kennen. Hier gibt es verschiedene Messeinrichtungen die nach den verschiedenen Messprinzipen (induktiv, optisch, kapazitiv, etc.) DE 38 30 386 A1 offenbart eine Drehverbindung gemäß dem Oberbegriff des Anspruchs 1.

### Zusammenfassung der Erfindung

Die Aufgabe ist es, eine Drehverbindung zu schaffen, die den zuvor genannten Anforderungen genügt.

Diese Aufgabe ist nach dem Gegenstand des Anspruches 1 durch ein messbares Laufgeräusch an der elektromotorisch angetriebenen Drehverbindung gelöst, das als Luftschall gemessen, Summenschalldruckpegel mit Werten von höchstens 70 dB(A), vorzugsweise 67 dB(A) aufweist. Die Geräuschmessung wird in 1m horizontalen Abstand von der Lagerebene auf der theoretisch fortgeführten Linie der Rotationsachse vorgenommen.

Das Wälzlager weist wenigstens eine Innenlaufbahn und eine Außenlaufbahn auf. Denkbar sind auch mehrere der Laufbahnen im Wälzlager. Die Wälzkörper stehen im Kontakt, bei Betrieb des Wälzlagers im Wälzkontakt, mit zumindest einer Innenlaufbahn und einer Außenlaufbahn, alternativ auch mit axial ausgerichteten Laufbahnen.

Die im Wälzlager umlaufenden Wälzkörper verursachen Geräusche in Form von Körperschall. Je höher die Betriebsdrehzahl, desto höher wird in der Regel das erzeugte Geräusch. Eine Körperschallisolierung des Wälzlagers behindert die Ausbreitung des Körperschalls in die Umbauteile und reduziert damit die Geräuschentwicklung. Dabei ist mindestens einer der Wälzlagerringe an seiner Mantel- und/oder Seitenfläche gegenüber den Umgebungsteilen körperschallisoliert. Das dabei verwendete Material zur Körperschallisolierung hat dabei im Vergleich zum Werkstoff des Wälzlagerringes ein Impedanzverhältnis p von mindestens 3. Das Impedanzverhältnis p ist wie folgt definiert:

$$p = \frac{\sqrt{E_1 \times \rho_1}}{\sqrt{E_2 \times \rho_2}}$$

p    Impedanzverhältnis
$E_1$    Elastizitätsmodul des Wälzlagerringes
$\rho_1$    Dichte des Wälzlagerringes
$E_2$    Elastizitätsmodul des Isolationsmaterials
$\rho_2$    Dichte des Isolationsmaterials

Ein weiteres Merkmal des geräuscharmen Wälzlagers ist die Oberflächentopographie der Laufbahnen, die durch eine definierte Welligkeit und/oder Oberflächenrauheit bestimmt ist. Die Rauhigkeit der Laufbahn ist auf einen Wert nicht größer als Ra 0,25 begrenzt. Die Angabe Ra ist ein bekannter und international normierter Wert, der als arithmetischer Mittelwert nach DIN EN 4287 definiert ist.: Dem an sich auch bekannten Begriff der Welligkeit sind folgende Merkmale zugrunde gelegt:

- zumindest die Oberfläche der Laufbahn ist durch beliebig viele zueinander parallel benachbarte Mantellinien mit in Umfangsrichtung jeweils wellenförmigen, und damit vom gedachten um die Rotationsachse umlaufenden vollkommen kreislinienförmig ausgebildeten Idealverlauf abweichenden, Verläufen beschrieben,

- die Verläufe sind jeweils durch in Umfangsrichtung (um die Rotationsachse) abwechselnd aufeinander folgende und dabei den jeweiligen Idealverlauf wiederholt schneidende Wellen beschrieben,

- Mittelwerte aus Summen aller Welligkeitsamplituden zwischen Wellenbergspitze und Wellentalsole beliebig vieler Perioden der Wellen eines Messbereiches an jeweils einer Mantellinie entsprechen maximal einem Quotienten aus der Konstanten 0,33 in mm/min und der Drehzahl in U/min und

- der Messbereich ist durch die Bogenlänge entlang der jeweiligen Laufbahn zwischen den jeweiligen Kontakten mit der Laufbahn von zwei in Umfangsrichtung aufeinander folgenden Wälzkörpern einer Reihe festgelegt.

Nach dieser Definition ergibt sich zum Beispiel für eine Betriebsdrehzahl n = 120 min$^{-1}$ und einen Wälzkörperabstand = 30 mm (Nennmaß, ohne Berücksichtigung etwaiger Maßabweichungen innerhalb zulässiger Toleranzgrenzen) eine max. zulässige Welligkeitsamplitude der Laufbahnen von 0,0028 mm.

Ein gemäß Erfindung geräuscharm ausgebildetes Drehverbindungssystem aus Wälzlager und Antriebseinheit ist kompakt und beansprucht wenig Bauraum. Es nimmt hohe radiale, axiale und Momentbelastungen sicher auf. Der Direktantrieb ist vorzugsweise integraler Bestandteil des Drehverbindungssystems und beansprucht daher keinen zusätzlichen Bauraum. Das rotierende Drehverbindungssystem verursacht in allen Drehzahlbereichen insbesondere jedoch bei Drehzahlen ab 100 U/min (1/min), vorzugsweise ab 160 U/min durch die Integration eines besonders geräuscharm ausgeführten Wälzlagers, wahlweise kombiniert mit der Körperschallisolierung, einen besonders geringen Geräuschpegel. Die Drehverbindung ist aufgrund der geringen Anzahl verwendeter Bauteile und seiner Kompaktheit kostengünstig herzustellen.

Der Direktantrieb sorgt dafür, dass die Antriebskräfte des Direktantriebs ohne Zwischenschaltung von weiteren Antriebskomponenten (wie beispielsweise Riemen oder Zahnräder, etc.), Bremsgenerator Umlenk- und Spannrollen, auf die Wälzlager-Drehverbindung übertragen werden.

Die vorzugsweise als Direktantrieb in die Drehverbindung integrierte elektromotorische Antriebseinheit ist als Drehmomentmotor in Ring- oder Segmentbauweise ausgebildet, wobei ein statisches Bauteil der Drehverbindung mit wenigstens einem aus Eisenkernen und elektrischen Wicklungen bestehenden Stator verbunden ist. Eines der rotierenden Bauteile der Drehverbindung ist mit Permanentmagneten bestückt.

Es ist weiter von Vorteil, dass mit Hilfe des Drehmomentmotors in Segmentbauweise oder als Ringmotor ausgebildet unterschiedliche Motorleistungen durch Zusammenstellen eines oder mehrerer Einzelsegmente bis hin zu einem komplett geschlossenen Ring zum Antrieb bereitgestellt werden können. Deren Gesamtantriebsleistung ist abhängig von der Anzahl und Größe der verwendeten Statorsegmente. Werden nur geringe Drehzahlen und kleine Drehmomente benötigt, so können zwischen den einzelnen Statorsegmenten breite Lücken belassen werden. Der Drehmomentmotor ist auch dann noch betriebsfähig, wenn im Falle einer geringeren benötigten Antriebsleistung nur ein Statorsegment angeordnet ist. Bei hohem Leistungsbedarf zur aktiven Drehung, Beschleunigung oder Abbremsung des Drehverbindungssystems ist dann die Ringmotorbauweise zu wählen.

Im Gegensatz zum Ringmotor muss ein Drehmomentmotor in Segmentbauweise geregelt betrieben werden, damit die Magnetkräfte jedes einzelnen Segmentes miteinander synchronisiert werden und somit der bestmögliche Wirkungsgrad sowie das niedrigste Geräuschniveau erreicht wird. Das dafür benötigte Eingangssignal des Frequenzumrichters zur Ansteuerung der Segmente ist nach einer Ausgestaltung der Erfindung durch die integrierte Sensorik für die Positionserfassung bereitgestellt. Werden sehr hohe Drehmomente abverlangt (z. B. bei kurzer Hochlaufphase der rotierenden Bauteile), so ist ein effizienter Betrieb des Ringmotors ebenfalls durch den geregelten Betrieb möglich. Durch den geregelten Betrieb der Antriebseinheit sind hohe Drehmomente bei gleichzeitig geringerer Leistungsstufe des Frequenzumrichters realisierbar.

Zur Positionserfassung der rotierenden Teile, z. B beim Computertomographen, solche zur Bildaufnahme- und Bildrekonstruktion, kann in das Drehverbindungssystem mit der Sensorik zusätzlich ein Positionsmesssystem integriert werden. Die Sensorik weist mindestens einen Sensor und einen Signalgeber auf. Der Sensor dient zum erfassen von Signalen des Signalgebers (Codierung) oder aber mehrere der zuvor genannten Bauteile beliebiger Ausführung auf. So ist zu Beispiel die Codierung durch einen E-lastomergürtel gebildet, der mit wechselnd polarisiert magnetisierten Partikeln (abwechselnd Nord und Südpol) versetzt ist. Die Sensorik kann auch weitere elektronische Bauteile zum Beispiel Wandler aufweisen.

In die Drehverbindung sind Wälzlager beliebiger Anzahl und beliebiger Bauform eingesetzt. Die Wälzlager sind einreihig oder mehrreihig ausgeführt. Die Wälzkörper sind Kugeln oder Rollen, die in Käfigen gehalten sein können. Der Werkstoff der Wälzkörper und der Laufbahnen ist vorzugsweise Stahl oder auch alle anderen denkbaren Werkstoffe, wie die Werkstoffe mit einer Dichte, die geringer als 5 Gramm pro Kubikmillimeter ist. Derartige Werkstoffe sind zum Beispiel keramische Werkstoffe.

Vorzugsweise kommen geräuscharme Dünnring-Vierpunktkugellager zum Einsatz. Gemäß der Erfindung ist für derartige Lager das Verhältnis von Durchmesser Teilkreis zu dem Durchmesser jedes einzelnen der Wälzkörper einer Reihe größer ist als 30:1, vorzugsweise 40:1, wobei der Teilkreis der gedachte Kreis ist, der konzentrisch zur Rotationsachse angeordnet ist und der, unbeachtlich eventueller Lageänderungen der Wälzkörper aufgrund von Spielen im Wälzlager, die parallel zur Rotationsachse ausgerichteten Mittenachsen der Wälzkörper schneidet Die Mittenachsen sind bei Rollen die Rotations- bzw. Symmetrieachsen und bei Kugeln gedachte, durch das Kugelzentrum und parallel zur Rotationsachse der Drehverbindung verlaufende Achsen.

Das Dünnring-Vierpunktkugellager ist die einfachste und robusteste Lagerbauform. Es ist so ausgelegt, dass mittlere Axial-, Radial- und Momentbelastungen sicher aufgenommen werden können. Das Dünnringlager mit dessen geringen Eigen- und Formstabilität wird unterstützt durch den Einbau in die Umgebungsteile.
Weiterhin werden Drahtbahnlager, Schrägkugellager sowie Rollenlager verwendet.

Das integrierte und geräuscharme Drehverbindungssystem bietet weiterhin die Möglichkeit der Integration der Wälzlagerlaufbahnen in die Umbauteile, wobei die Wälzlagerlaufbahnen dann direkt in das entsprechende Umbauteil eingearbeitet sind. Ein Umbauteil ist zum Beispiel ein Gehäuse, in das das Wälzlager, oder mindestens einer der Lagerringe oder zumindest eine der Laufbahnen integriert ist und/oder ein Rotor oder eine Welle auf dem/der das Wälzlager, oder mindestens einer der Lagerringe oder zumindest eine der Laufbahnen angeordnet ist.

**Beschreibung der Zeichnungen**

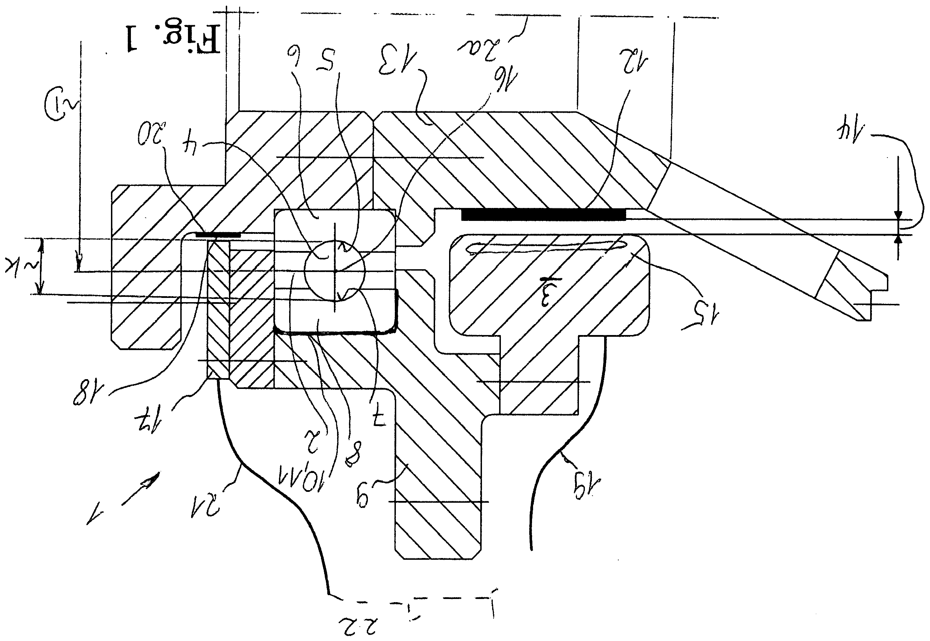

Figur 1 zeigt eine Drehverbindung 1 mit wenigstens einem Wälzlager 2 und mit einer elektromotorischen Antriebseinheit 3 in einem Teilschnitt entlang der Rotationsachse 2a und nicht maßstäblich dargestellt. Das Wälzlager 2 weist eine um die Rotationsachse 2a des Wälzlagers 2 angeordneten Reihe Wälzkörper 4 auf. Die Wälzkörper 4 sind im Kontakt mit einer durch die Antriebseinheit antreibbaren Laufbahn 5 an einem Innenring 6 und im Kontakt mit eine Laufbahn 7 an einem Außenring 8. Der Außenring 8 ist in einem rotationsfesten Umbauteil in Form eines Gehäuses 9 fest.

Zwischen dem Außenring 8 und dem Gehäuse 9 eine Körperschallisolierung 10 in Form einer auf den Außenring 8 aufvulkanisierten Isolierschicht 11 aus einem Elastomer. Die Isolierschicht 11 ist alternativ eine Einlage.

Ein Drehmotor der Antriebseinheit 3 weist Permanentmagnete 12 auf, die direkt auf einem Rotor 13 der Drehverbindung 1 sitzen. Der Rotor 13 des Drehmotors ist mit der angetriebenen Laufbahn 5 drehfest gekoppelt sowie durch einen um die Rotationsachse 2a umlaufenden Luftspalt 14 von nicht detailliert dargestellten elektrischen Wicklungen eines Stators 15 des Drehmotors getrennt.

Das Verhältnis von Durchmesser D Teilkreis zu dem Durchmesser K jedes einzelnen der Wälzkörper 4 der Reihe ist größer als 30:1, wobei der Teilkreis der gedachte Kreis ist, der konzentrisch zur Rotationsachse 2a angeordnet ist und der die parallel zur Rotationsachse 2a ausgerichteten sowie in senkrecht in die Darstellungsebene stoßenden Mittenachsen 16 der Wälzkörper 4 schneidet. Die Wälzkörper 4 und Lagerringe 6 bzw. 8 sind wahlweise aus Stahl oder aus Keramik, wobei auch Kombinationen von Wälzkörpern bzw. Bauteilen des Wälzlagers aus Stahl mit Bauteilen bzw. Wälzkörpern aus Keramik denkbar sind.

In der Drehverbindung ist eine Sensorik 18 aus einem Sensor 17 und aus einer Codierung 20, mit der zumindest relative Positionen in Umfangsrichtung zwischen dem Rotor 13 dem Stator 15 erfassbar sind. Der Sensor 17 ist am Stator 15 fest, der Codierung 20 am Rotor 13. Von dem Sensor geht ein Verbindungskabel 21 ab, das auch wahlweise mit der gestrichelt angedeuteten Regeleinheit 22 verbunden sein kann. Von der Regeleinheit 22 führt ein Verbindungskabel 19 zur Antriebseinheit 3, so dass die Regeleinheit 22 Ausgangssignale der Sensorik 18 in Eingangssignale zum Regeln des Drehmotors umwandeln kann.

**Bezugzeichen**

| | | | |
|---|---|---|---|
| 1 | Drehverbindung | 12 | Permanentmagnet |
| 2 | Wälzlager | 13 | Rotor |
| 2a | Rotationsachse | 14 | Luftspalt |
| 3 | Antriebseinheit | 15 | Stator |
| 4 | Wälzkörper | 16 | Mittenachse |
| 5 | Laufbahn | 17 | Sensor |
| 6 | Innenring | 18 | Sensorik |

(fortgesetzt)

| | | | |
|---|---|---|---|
| 7 | Laufbahn | 19 | Verbindungskabel |
| 8 | Außenring | 20 | Codierung |
| 9 | Gehäuse | 21 | Verbindungskabel |
| 10 | Körperschallisolierung | 22 | Regeleinheit |
| 11 | Isolierschicht | | |

**Patentansprüche**

1. Drehverbindung (1) mit wenigstens einem Wälzlager (2) und mit einer elektromotorischen Antriebseinheit (3), wobei das Wälzlager (2) wenigstens eine Reihe um die Rotationsachse (2a) angeordneter Wälzkörper (4) aufweist, und wobei die Wälzkörper (4) im Kontakt mit mindestens einer durch die Antriebseinheit (3) antreibbaren Laufbahn (5) stehen, mit einer Körperschallisolierung (10) zumindest zwischen einer Laufbahn (5) und der Umgebung der Laufbahn (5) und/oder an Schnittstellen zwischen Bauteilen der Drehverbindung und/oder an Schnittstellen der Drehverbindung zur Umgebung der Drehverbindung, **gekennzeichnet durch** Oberflächenrauhigkeiten der Oberfläche der durch die Antriebseinheit (3) angetriebenen ersten Laufbahn (5) und durch Oberflächenrauhigkeiten der Oberfläche von zumindest einer zweiten Laufbahn (7) mit Werten Ra < 0,25, wobei die Reihe Wälzkörper (4) im Kontakt mit der zweiten Laufbahn (7) steht, sowie **dadurch, dass** das Verhältnis von Durchmesser Teilkreis zu dem Durchmesser jedes einzelnen der Wälzkörper einer Reihe größer ist als 30:1, wobei der Teilkreis der gedachte Kreis ist, der konzentrisch zur Rotationsachse (2a) angeordnet ist und der die parallel zur Rotationsachse (2a) ausgerichteten Mittenachsen (16) der Wälzkörper (4) schneidet

2. Drehverbindung nach Anspruch 1, **gekennzeichnet, durch** eine Isolierschicht (11) als Körperschallisolierung (10), wobei die Isolierschicht (11) aus mindestens einem Werkstoff ist, dessen Elastizitätsmodul und/oder Dichte geringer ist als das Elastizitätsmodul und/oder die Dichte des Werkstoffes des Bauteils in dem die Laufbahn ausgebildet ist.

3. Drehverbindung nach Anspruch 1 oder 2, **gekennzeichnet, durch** ein Impedanzverhältnis (p), das mindestens den Wert 3 aufweist, wobei das Impedanzverhältnis (p) ein Quotient aus einer Quadratwurzel eines Produktes aus Elastizitätsmodul ($E_1$) und Dichte ($\rho_1$) des Werkstoffes der Laufbahn und aus der Quadratwurzel eines Produktes aus Elastizitätsmodul ($E_2$) und Dichte ($\rho_2$) des Werkstoffes der Isolierschicht, also $p = \dfrac{\sqrt{E_1 \times \rho_1}}{\sqrt{E_2 \times \rho_2}}$ ist.

4. Drehverbindung nach mindestens einem der Ansprüche 1 bis 3, **gekennzeichnet durch** eine Isolierschicht (11) aus zumindest einem Elastomerwerkstoff.

5. Drehverbindung nach mindestens einem der voranstehenden Ansprüche, **gekennzeichnet, durch** die Werte bei Drehzahlen der elektromotorisch durch die Antriebseinheit (3) angetriebenen und um die Rotationsachse (2a) rotierenden Laufbahn (5) von mindestens 80 U/min.

6. Drehverbindung nach mindestens einem der voranstehenden Ansprüche, **gekennzeichnet durch** folgende Merkmale:

   - zumindest die Oberfläche der Laufbahn (5) ist durch beliebig viele zueinander parallel benachbarte Mantellinien mit in Umfangsrichtung jeweils wellenförmigen, und damit vom gedachten um die Rotationsachse (2a) umlaufenden vollkommen kreislinienförmig ausgebildeten Idealverlauf abweichenden, Verläufen beschrieben,
   - die Verläufe sind jeweils durch in Umfangsrichtung abwechselnd aufeinander folgende und dabei den jeweiligen Idealverlauf wiederholt schneidende Wellen beschrieben,
   - der Maximalwert aller Welligkeitsamplituden zwischen Wellenberg und Wellental beliebig vieler Perioden eines Messbereiches an jeweils einer der Mantellinie entspricht maximal einem Quotienten aus der Konstanten 0,33 in mm/min und der Drehzahl der angetriebenen Laufbahn in U/min und
   - der Messbereich ist durch das Nennmaß der Bogenlänge entlang der Laufbahn zwischen den jeweiligen Kontakten mit der Laufbahn (5) von zwei in Umfangsrichtung aufeinander folgenden Wälzkörpern einer Reihe festgelegt.

**7.** Drehverbindung nach Anspruch 6, **gekennzeichnet, durch** Mantellinien mit den wellenförmigen Verläufen von zumindest einer zweiten Laufbahn (7), wobei die zweite Laufbahn (7) im Kontakt mit den Wälzkörpern (4) der Reihe Wälzkörper (4).

**8.** Drehverbindung nach mindestens einem der voranstehenden Ansprüche, **gekennzeichnet, durch** einen Lagerring (8), an dem die Laufbahn (5) ausgebildet ist.

**9.** Drehverbindung nach mindestens einem der voranstehenden Ansprüche, **gekennzeichnet durch** zumindest einige der Wälzkörper (4) der Reihe aus einem Werkstoff mit der Dichte $\rho <\, = 5$ g/cm$^3$.

**10.** Drehverbindung nach mindestens einem der voranstehenden Ansprüche, **gekennzeichnet, durch** zumindest einige der Wälzkörper (4) der Reihe aus einem gegen elektrischen Strom isolierenden Werkstoff, wobei der spezifische elektrische Widerstand des Werkstoffes größer $10^{10}$ Ohm · mm$^2$/m ist.

**11.** Drehverbindung nach mindestens einem der voranstehenden Ansprüche, **gekennzeichnet, durch** eine Sensorik (18) in der Drehverbindung (1), mit der zumindest relative Positionen in Umfangsrichtung zwischen einem Rotor (13) eines Drehmotors der Antriebseinheit (3) und dem Stator (15) des Drehmotors erfassbar sind, wobei der Rotor (13) drehfest mit der Laufbahn (5) gekoppelt ist.

**12.** Drehverbindung nach Anspruch 11, **gekennzeichnet, durch** eine mit dem Drehmotor und der Sensorik (18) gekoppelte Regeleinheit (22) zur Umsetzung von Ausgangssignalen der Sensorik (18) in Eingangssignale zum Regeln des Drehmotors.

**Claims**

**1.** Revolving joint (1) with at least one rolling contact bearing (2) and with an electromotive drive unit (3), wherein the rolling contact bearing (2) has at least one row of rolling bodies (4) arranged around the rotational axis (2a), and wherein the rolling bodies (4) are in contact with at least one running track (5) which can be driven by the drive unit (3), with a solid-borne-sound insulating means (10) at least between a running track (5) and the surroundings of the running track (5) and/or at intersections between components of the revolving joint and/or at intersections of the revolving joint with the surroundings of the revolving joint, **characterized by** surface roughnesses of the surface of the first running track (5) driven by the drive unit (3) and by surface roughnesses of the surface of at least one second running track (7) where Ra values < 0.25, with the row of rolling bodies (4) being in contact with the second running track (7), and **characterized in that** the ratio of the diameter of the reference circle to the diameter of each one of the rolling bodies of a row is greater than 30:1, with the reference circle being the imaginary circle which is arranged concentrically with respect to the rotational axis (2a) and which intersects the center axes (16) of the rolling bodies (4), which center axes are oriented parallel to the rotational axis (2a).

**2.** Revolving joint according to Claim 1, **characterized by** an insulating layer (11) as the solid-borne-sound insulating means (10), the insulating layer (11) being made from at least one material, the modulus of elasticity and/or the density of which is lower than the modulus of elasticity and/or the density of the material of the component in which the running track is formed.

**3.** Revolving joint according to Claim 1 or 2, **characterized by** an impedance ratio (p) which has at least the value 3, with the impedance ratio (p) being a quotient of a square root of a product of modulus of elasticity ($E_1$) and density ($\rho_1$) of the material of the running track and of the square root of a product of modulus of elasticity ($E_2$) and density ($\rho_2$) of the material of the insulating layer, i.e.

$$\rho = \frac{\sqrt{E_1 \times \rho_1}}{\sqrt{E_2 \times \rho_2}}$$

**4.** Revolving joint according to at least one of Claims 1 to 3, **characterized by** an insulating layer (11) made from at least one elastomer material.

**5.** Revolving joint according to at least one of the preceding claims, **characterized by** rotational-speed values of the running track (5), which is driven electromotively by the drive unit (3) and rotates about the rotational axis (2a), of at least 80 rpm.

6.  Revolving joint according to at least one of the preceding claims, **characterized by** the following features:

    - at least the surface of the running track (5) is described by any desired number of surface lines adjacent parallel to one another with profiles which are each wave-shaped in the circumferential direction and therefore deviate from the imaginary ideal profile which encircles the rotational axis (2a) and is designed entirely in the form of a circular curve,
    - the profiles are each described by waves which follow one another in an alternating manner in the circumferential direction and, in the process, repeatedly intersect the particular ideal profile,
    - the maximum value of all of the waviness amplitudes between wave crest and wave trough of any desired number of periods of a measuring range on one of the surface lines in each case corresponds at maximum to a quotient of the constant 0.33 in mm/min and of the rotational speed of the driven running track in rpm, and
    - the measuring range is defined by the nominal size of the curve length along the running track between the respective contacts with the running track (5) of two rolling bodies of a row that follow one another in the circumferential direction.

7.  Revolving joint according to Claim 6, **characterized by** surface lines with the wavy profiles of at least one second running track (7), with the second running track (7) being in contact with the rolling bodies (4) of the row of rolling bodies (4).

8.  Revolving joint according to at least one of the preceding claims, **characterized by** a bearing race (8) on which the running track (5) is formed.

9.  Revolving joint according to at least one of the preceding claims, **characterized by** at least some of the rolling bodies (4) of the row being made from a material with the density $\rho <\, = 5$ g/cm$^3$.

10. Revolving joint according to at least one of the preceding claims, **characterized by** at least some of the rolling bodies (4) of the row being made from a material which provides insulation against electric current, with the specific electrical resistance of the material being greater than $10^{10}$ Ohm $\cdot$ mm$^2$/m.

11. Revolving joint according to at least one of the preceding claims, **characterized by** a sensor system (18) in the revolving joint (1), with which at least relative positions in the circumferential direction between a rotor (13) of a torque motor of the drive unit (3) and the stator (15) of the torque motor can be detected, with the rotor (13) being coupled in a rotationally fixed manner to the running track (5).

12. Revolving joint according to Claim 11, **characterized by** a control unit (22), which is coupled to the torque motor and to the sensor system (18), for converting output signals of the sensor system (18) into input signals to control the torque motor.

## Revendications

1.  Joint rotatif (1) comprenant au moins un palier à roulement (2) et une unité d'entraînement à moteur électrique (3), le palier à roulement (2) présentant au moins une rangée de corps de roulement (4) disposés autour de l'axe de rotation (2a), et les corps de roulement (4) étant en contact avec au moins un chemin de roulement (5) pouvant être entraîné par l'unité d'entraînement (3), avec une isolation des bruits structurels (10) au moins entre un chemin de roulement (5) et l'environnement du chemin de roulement (5) et/ou au niveau d'interfaces entre des composants du joint rotatif et/ou au niveau d'interfaces entre le joint rotatif et l'environnement du joint rotatif, **caractérisé par** des rugosités de surface de la surface du premier chemin de roulement (5) entraîné par l'unité d'entraînement (3) et par des rugosités de surface de la surface d'au moins un deuxième chemin de roulement (7) avec des valeurs Ra < 0,25, la rangée de corps de roulement (4) étant en contact avec le deuxième chemin de roulement (7), et **en ce que** le rapport du diamètre du cercle partiel au diamètre de chaque corps de roulement individuel d'une rangée est supérieur à 30:1, le cercle partiel étant le cercle imaginaire qui est disposé concentriquement à l'axe de rotation (2a) et qui coupe les axes médians (16) des corps de roulement (4) orientés parallèlement à l'axe de rotation (2a).

2.  Joint rotatif selon la revendication 1, **caractérisé par** une couche d'isolation (11) en tant qu'isolation vis-à-vis des bruits structurels (10), la couche d'isolation (11) étant constituée d'au moins un matériau dont le module d'élasticité et/ou la densité est inférieur(e) au module d'élasticité et/ou à la densité du matériau des composants dans lequel est réalisé le chemin de roulement.

3. Joint rotatif selon la revendication 1 ou 2, **caractérisé par** un rapport d'impédance (p) qui présente au moins la valeur 3, le rapport d'impédance (p) étant un quotient d'une racine carrée d'un produit du module d'élasticité ($E_1$) et de la densité ($\rho_1$) du matériau du chemin de roulement et de la racine carrée d'un produit du module d'élasticité ($E_2$) et de la densité ($\rho_2$) du matériau de la couche d'isolation, c'est-à-dire

$$p = \frac{\sqrt{E_1 \times \rho_1}}{\sqrt{E_2 \times \rho_2}} \; .$$

4. Joint rotatif selon au moins l'une quelconque des revendications 1 à 3, **caractérisé par** une couche d'isolation (11) constituée d'au moins un matériau élastomère.

5. Joint rotatif selon au moins l'une quelconque des revendications précédentes, **caractérisé par** les valeurs d'au moins 80 tr/min pour des vitesses de rotation du chemin de roulement (5) entraîné par moteur électrique par l'unité d'entraînement (3) et tournant autour de l'axe de rotation (2a).

6. Joint rotatif selon au moins l'une quelconque des revendications précédentes, **caractérisé par** les caractéristiques suivantes :

   - au moins la surface du chemin de roulement (5) est décrite par un nombre quelconque de génératrices adjacentes parallèlement les unes aux autres ayant chacune des allures de forme ondulée dans la direction périphérique et par conséquent s'écartant de l'allure idéale imaginaire complètement linéaire circulaire autour de l'axe de rotation (2a),
   - les allures sont à chaque fois décrites par des ondes se suivant en alternance dans la direction périphérique et coupant à nouveau en l'occurrence l'allure idéale respective,
   - la valeur maximale de toutes les amplitudes d'ondulations entre le sommet d'une ondulation et le creux d'une ondulation d'un nombre quelconque de périodes d'une plage de mesure au niveau de chacune des génératrices correspond au maximum à un quotient de la constante 0,33 en mm/min et de la vitesse de rotation du chemin de roulement entraîné en t/min et
   - la plage de mesure est établie par la mesure nominale de la longueur d'arc le long du chemin de roulement entre les contacts respectifs avec le chemin de roulement (5) de deux corps de roulement successifs d'une rangée dans la direction périphérique.

7. Joint rotatif selon la revendication 6, **caractérisé par** des génératrices avec les allures de forme ondulée d'au moins un deuxième chemin de roulement (7), le deuxième chemin de roulement (7) étant en contact avec les corps de roulement (4) de la rangée de corps de roulement (4).

8. Joint rotatif selon au moins l'une quelconque des revendications précédentes, **caractérisé par** une bague de palier (8) au niveau de laquelle est réalisé le chemin de roulement (5).

9. Joint rotatif selon au moins l'une quelconque des revendications précédentes, **caractérisé en ce qu'**au moins certains des corps de roulement (4) de la rangée sont en un matériau ayant une densité $p < 5$ g/cm$^3$.

10. Joint rotatif selon au moins l'une quelconque des revendications précédentes, **caractérisé en ce qu'**au moins certains des corps de roulement (4) de la rangée sont constitués d'un matériau isolant vis-à-vis du courant électrique, la résistance électrique spécifique du matériau étant supérieure à $10^{10}$ Ohm·mm$^2$/m.

11. Joint rotatif selon au moins l'une quelconque des revendications précédentes, **caractérisé par** un système de capteur (18) dans le joint rotatif (1), avec lequel au moins des positions relatives dans la direction périphérique entre un rotor (13) d'un moteur rotatif de l'unité d'entraînement (3) et le stator (15) du moteur rotatif peuvent être détectées, le rotor (13) étant accouplé de manière solidaire en rotation au chemin de roulement (5).

12. Joint rotatif selon la revendication 11, **caractérisé par** une unité de régulation (22) accouplée au moteur rotatif et au système de capteur (18) pour convertir des signaux de sortie du système de capteur (18) en signaux d'entrée pour la régulation du moteur rotatif.

Fig. 1

**IN DER BESCHREIBUNG AUFGEFÜHRTE DOKUMENTE**

**In der Beschreibung aufgeführte Patentdokumente**

- DE 10210071 A1
- DE 3830386 A1